# EUROPÄISCHE PATENTSCHRIFT

(11) **EP 1 301 272 B1**
(45) Veröffentlichungstag und Bekanntmachung des Hinweises auf die Patenterteilung: **25.10.2006**
(21) Anmeldenummer: 01957732.9
(22) Anmeldetag: 19.07.2001
(51) Int. Cl.: B01J 23/46, B01D 53/86, B01D 53/94

(54) **VERFAHREN ZUR ENTFERNUNG VON KOHLENWASSERSTOFFSPUREN AUS GASSTRÖMEN**
METHOD FOR ELIMINATING TRACES OF HYDROCARBONS FROM GAS STREAMS
PROCEDE POUR ELIMINER DES TRACES D'HYDROCARBURES DE FLUX GAZEUX

(30) Priorität: 20.07.2000 DE 10037165
(43) Veröffentlichungstag der Anmeldung: 16.04.2003
(73) Patentinhaber: Institut für Angewandte Chemie Berlin-Adlershof E.V., 12489 Berlin (DE)
(72) Erfinder: RODEMERCK, Uwe, D-12459 Berlin (DE); IGNASZEWSKI, Peter, D-12309 Berlin (DE); CLAUS, Peter, D-13057 Berlin (DE); GERLACH, Olga, 67071 Ludwigshafen (DE); BAERNS, Manfred, 14195 Berlin (DE); WOLF, Dorit, 60439 Frankfurt (DE)
(74) Vertreter: Walter, Wolf-Jürgen
(86) Internationale Anmeldenummer: PCT/DE2001/002789
(87) Internationale Veröffentlichungsnummer: WO 2002/007878

(56) Entgegenhaltungen:
- EP-A- 0 682 975
- DE-A- 2 351 237
- US-A- 3 931 050
- US-A- 4 350 613
- WEISWEILER, W.; KURETI, S.; KINDTNER, A.: "Lachgas-Zersetzung bei der durch Platinmetalle katalysierten Stickoxid-Reduktion aus sauerstoffhaltigen Pkw-Motorabgasen" [Online] XP002180781 Gefunden im Internet: <URL: http://bwplus.fzk.de/berichte/SBer/PEF3960 05SBer.pdf> [gefunden am 2001-10-19] Seite 34; Tabelle 5.3

## Beschreibung

Die Erfindung betrifft ein katalytisches Verfahren zur Entfernung von Spuren von Kohlenwasserstoffen, insbesondere Propan, aus Gasströmen.

Es sind bereits Katalysatoren für die Totaloxidation von Kohlenwasserstoffen beschrieben worden, die üblicherweise die Platinmetalle Platin und Palladium, eventuell auch Rhodium, enthalten (J. Catal. 7 (1967) 23, Catal. Today 54 (1999) 31, Ind. Eng. Chem. Prod. Res. Dev. 19 (1980) 293, J. Catal. 159 (1996) 361, J. prakt. Chem. 334 (1992) 465, US 5,915,951). Allen diesen bisher bekannten Katalysatoren ist gemeinsam, daß sie erst ab Temperaturen von etwa 250 °C aktiv sind. Katalysatoren, die bereits bei Raumtemperatur Kohlenwasserstoffe zu Kohlenoxiden umsetzen, sind nicht bekannt (Catal. Rev.-Sci. Eng. 29 (1987) 219). In einem japanischen Patent (JP 9113486) ist eine Methode beschrieben, bei der mittels Hochspannungsentladung gekoppelt mit einem Pt-Katalysator Kohlenwasserstoffe bei 100-150 °C umgesetzt werden können. Dieses Verfahren ist jedoch sehr aufwendig.

Die EP-A-682975 betrifft u.a. einen Mischkatalysator aus Ag und Rh für die Entfernung von Stickoxiden, CO und Kohlenwasserstoffen bei Temperaturen von 150-650 °C. Die US-A-4350237 betrifft die katalytische Abgasreinigung bei Temperaturen von 200 °C.. Die DE-A-2351237 beschreibt Mischkatalysatoren aus u.a. Pt und Rh für die Abgasreinigung, wobei Arbeitstemperaturen von 500 °C offenbart werden. In der US-A-3931450 sind Mischkatalysatoren aus Pt und Rh zur Stickoxidentfernung beschrieben, die bei 720 °C getestet wurden. Weisweiler et al. (http://bwplus:fzk.de/berichte/Sber/PEF396005Sber.pdf) beschreiben eine katalytische Lachgaszersetzung.

Der Erfindung liegt die Aufgabe zugrunde, ein Verfahren zu entwickeln, bei dem Propan und andere in Gasströmen in geringer Menge enthaltene Kohlenwasserstoffe bereits bei niedrigen Temperaturen zu Kohlenoxiden, vorzugsweise zu Kohlendioxid umgewandelt werden.

Erfindungsgemäß ist das Verfahren zur Entfernung von Kohlenwasserstoffspuren aus Gasströmen dadurch gekennzeichnet, daß man einen Gasstrom, der Spuren von Kohlenwasserstoffen im Bereich von 0,1 bis 2000 ppm enthält, unter Zusatz von molekularem Sauerstoff bei einer Temperatur im Bereich von 20 bis 150 °C über einen Katalysator mit einer spezifischen BET-Oberfläche von 1 bis 1500 m²/g leitet, der aus einem offenporigen, oxidischen Grundkörper mit Ruthenium auf dessen Oberfläche in einer Menge von 0,1 bis 20 Gew-%, bezogen auf das Gesamtgewicht des Katalysators, und gegebenenfalls zusätzlich zu Ruthenium Bismut, Blei, Molybdän, Mangan, Tellur, Chrom oder Kombinationen davon besteht.

Das Trägermaterial ist vorteilhaft aus der Gruppe ausgewählt, bestehend aus Titaniumdioxid, Titanium-Silikalit, Aluminiumoxid, Alumosilicaten, Manganoxiden, Magnesiumoxid, saurem Zirkon-dioxid und Gemischen davon, und es ist besonders bevorzugt TiO₂, das zu 20-100 Gew-% aus der Modifikation Anatas besteht.

In einer weiteren bevorzugten Ausführungsform ist das Trägermaterial Al₂O₃.

Der Rutheniumanteil liegt vorteilhaft im Bereich von 0,5 bis 10 Gew-%, besonders bevorzugt im Bereich von 0,5 bis 5 Gew-% , und insbesondere im Bereich von 0,5 bis 3 Gew-%.

Der Katalysator kann zusätzlich zu Ruthenium Elemente auf der Katalysatoroberfläche tragen, die aus der Gruppe ausgewählt sind, bestehend aus Bismut, Tellur, Blei, Molybdän, Mangan, Germanium, Chrom, Zink, Lanthan, Seltenerdmetalle und
Kombinationen davon. Es wurde gefunden, daß durch derartige Zusätze verbesserte Aktivitäten bei der Entfernung von geringen Mengen an Kohlenwasserstoffen aus Gasströmen erreicht werden konnten.

Besonders bevorzugte zusätzliche Elemente zu Ruthenium auf der Katalysatoroberfläche sind Bismut, Blei, Molybdän, Mangan, Tellur, Chrom allein oder in Kombinationen miteinander.

Die Herstellung des Katalysators erfolgt durch Auftragen von Rutheniumlösungen auf die Katalysatoroberfläche, Trocknen des Katalysatorvorläufers bei Temperaturen im Bereich von 20 bis 120 °C, Calcinieren des Katalysatorvorläufers in Anwesenheit von Sauerstoff bei einer Temperatur im Bereich von 200 bis 600 °C, und Reduzieren des Katalysators in einer Wasserstoffatmosphäre bei Temperaturen von 200 bis 400 °C oder Calcinieren und Reduzieren bei den genannten Bedingungen.

Dabei wird als Rutheniumlösung vorzugsweise Ruthenium(III)acetylacetonat oder wäßriges Ruthenium(1II)chlorid eingesetzt.

Vor dem Trocknen können gleichzeitig mit der Rutheniumlösung oder nacheinander Lösungen von Metallverbindungen aufgetragen werden, wobei die Metalle aus der Gruppe ausgewählt sind, bestehend aus Platin, Palladium, Gold, Bismut, Tellur, Blei, Molybdän, Mangan, Rhodium, Rhenium, Germanium, Chrom, Zink, Lanthan, Seltenerdmetalle und Kombinationen davon.

In dem erfindungsgemäßen Verfahren ist ein bevorzugter Kohlenwasserstoffanteil 10 bis 2000 ppm, und ein bevorzugter Kohlenwasserstoffist beispielsweise Propan.
Vorteilhaft kann das Propan im Gasstrom in einer Konzentration von 0,1 bis 1000 ppm enthalten sein, insbesondere 10-1000 ppm. Die Temperatur, mit der der propanhaltige Gasstrom mit dem Katalysator in Kontakt gebracht wird, liegt dabei insbesondere im Bereich von 50 bis 150 °C.
Der Gasstrom besteht vorzugsweise aus Luft oder enthält Luft als Lieferant von molekularem Sauerstoff Der Sauerstoffanteil sollte zumindest so groß sein, daß eine Umsetzung der Kohlenwasserstoffe gewährleistet ist. Bevorzugt ist die Umwandlung der Kohlenwasserstoffe zu Kohlendioxid.

Weiterhin bevorzugt enthält der Gasstrom keine Stickoxide.

Die Umwandlung von Kohlenwasserstoffen zu Kohlenoxiden wird somit erfindungsgemäß erreicht, indem geeignete Trägermaterialien, wie z.B. TiO₂ oder Al₂O₃ mit Ruthenium als Aktivkomponente beladen, mit einem oder mehreren Elementen dotiert und anschließend bei erhöhter Temperatur kalziniert und/oder reduziert werden. Durch diese Maßnahmen werden Katalysatoren bereitgestellt, die Kohlenwasserstoffe, insbesondere Propan, bereits bei Temperaturen von 20 bis 150 °C oxidieren. Beispielsweise wird Propan (0,1 Vol% in Luft) an einem 3 Masse % (Ma%) Ruthenium auf Titandioxid enthaltenen Katalysator bei 50 °C zu 12%, bei 100 °C zu 30% und bei 150 °C zu 81 % zu Kohlenoxiden umgesetzt, während die entsprechenden [F&W1]Umsatzgrade an auf dieselbe Art und Weise hergestellten Katalysatoren, die andere Platinmetalle enthalten, viel geringer sind (Pt: 3, 8 und 21%; Pd: 1, 3 und 14%).

Die Katalysatoren zeigen eine hohe Aktivität bereits bei niedrigen Temperaturen (50-150 °C).

Die Erfindung wird nachstehend durch Beispiele näher erläutert. Die Oberflächemnessungen erfolgten nach dem BET-Verfahren (Z.Anal.Chem. 238, 187 (1968)).

### Beispiel 1 - 26

Die Herstellung der Katalysatorvorläufer erfolgte in zwei Schritten, wobei einzelne Schritte bzw. Ausgangsverbindungen entfallen, falls die entsprechenden Verbindungen nicht Bestandteil des Katalysators sind. Das poröse Trägermaterial TiO₂ (Degussa Aerolyst 7710, 0,25-0,5 mm, BET 49 m²/g, Porenvolumen 0.88 ml/g) wurde zunächst mit einer Mischung von wässrigen Lösungen der Ausgangsverbindungen H₂[PtCl₆], H[AuCl₄], und Mn(NO₃)₂ getränkt und bei 110 °C getrocknet. In einer zweiten Stufe wurden die erhaltenen Materialien mit einer Mischung von wässrigen Lösungen der Ausgangsverbindungen (NH₄)₂PdCl₄, RhCl₃ und RuCl₃ getränkt und wiederum bei 110 °C getrocknet. Die auf diese Weise hergestellten Katalysatorvorläufer wurden für 2 Stunden im Luftstrom (33 ml/min für jeweils 200 mg Katalysator) bei 400 °C kalziniert und anschließend für 2 Stunden im Wasserstoffstrom (33 ml/min für jeweils 200 mg Katalysator) bei 250 °C reduziert. Die katalytische Testung erfolgte mit je 200 mg Katalysator und einem Gasgemisch aus 0,1 Vol% Propan und 20 Vol% O₂ in Helium bei einem Volumenstrom von 6 ml/min. In Tabelle 1 sind die Katalysatorzusammensetzungen und die Propanumsätze bei verschiedenen Reaktortemperaturen angegeben.

**Tabelle 1a: Katalysatorzusammensetzung für die Beispiele 1-26, Trägermaterial: TiO₂ (Degussa Aerolyst)**

| Beispiel Nr. | Aktivkomponenten / Masse% | | | | | |
|---|---|---|---|---|---|---|
| | Ru | Pt | Pd | Rh | Au | Mn |
| 1 | 1,72 | 0 | 0 | 0 | 0 | 1,28 |
| 2 | 2,35 | 0,65 | 0 | 0 | 0 | 0 |
| 3 | 1,00 | 0 | 0 | 1,10 | 0,91 | 0 |
| 4 | 1,40 | 0 | 0 | 1,60 | 0 | 0 |
| 5 | 2,41 | 0 | 0,59 | 0 | 0 | 0 |
| 6 | 1,93 | 1,07 | 0 | 0 | 0 | 0 |
| 7 | 1,66 | 0 | 0 | 0 | 1,34 | 0 |
| 8 | 1,17 | 0,20 | 0 | 1,15 | 0,47 | 0 |
| 9 | 1,33 | 0,24 | 0 | 0,76 | 0 | 0,67 |
| 10 | 3,00 | 0 | 0 | 0 | 0 | 0 |
| 11 | 1,17 | 0,20 | 0 | 1,15 | 0,47 | 0 |
| 12 | 2,35 | 0,65 | 0 | 0 | 0 | 0 |
| 13 | 2,01 | 0 | 0,99 | 0 | 0 | 0 |
| 14 | 1,92 | 1,07 | 0 | 0 | 0 | 0 |
| 15 | 0,61 | 0,21 | 0 | 1,19 | 0,99 | 0 |
| 16 | 1,39 | 0,24 | 0 | 1,36 | 0 | 0 |
| 17 | 1,52 | 0 | 1,49 | 0 | 0 | 0 |
| 18 | 1,43 | 0 | 0 | 1,57 | 0 | 0 |
| 19 | 1,91 | 0 | 0 | 1,09 | 0 | 0 |
| 20 | 1,00 | 0 | 0 | 1,10 | 0,91 | 0 |
| 21 | 1,01 | 0,18 | 0 | 0,99 | 0,82 | 0 |
| 22 | 0,98 | 0,89 | 1,07 | 0,06 | 0 | 0 |
| 23 | 0,58 | 0 | 0,79 | 0,68 | 0,95 | 0 |
| 24 | 1,44 | 0 | 0 | 0,83 | 0 | 0,73 |
| 25 | 1,17 | 0 | 0,99 | 0 | 0 | 0,84 |
| 26 | 0,75 | 0 | 0 | 0,43 | 1.44 | 0,38 |

**Tabelle 1b: Aktivität der Katalysatoren nach Beispiel 1-26 bei der Propanoxidation (200 mg Katalysator, Volumenstrom 6ml/mm, 0,1% Propan, 20% O₂ in He)**

| Beispiel Nr. | Propanumsatz / % | | |
|---|---|---|---|
| | 50 °C | 100 °C | 150 °C |
| 1 | 11 | 37 | 84 |
| 2 | 7 | 34 | 84 |
| 3 | 12 | 33 | 68 |
| 4 | 12 | 33 | 68 |
| 5 | 4 | 32 | 81 |
| 6 | 9 | 32 | 83 |
| 7 | 10 | 31 | 80 |
| 8 | 16 | 30 | 70 |
| 9 | 9 | 30 | 60 |
| 10 | 12 | 30 | 75 |
| 11 | 4 | 30 | 67 |
| 12 | 15 | 29 | 78 |
| 13 | 1 | 29 | 62 |
| 14 | 2 | 29 | 70 |
| 15 | 12 | 29 | 67 |
| 16 | 13 | 28 | 59 |
| 17 | 9 | 28 | 58 |
| 18 | 2 | 25 | 72 |
| 19 | 1 | 24 | 60 |
| 20 | 5 | 24 | 65 |
| 21 | 1 | 24 | 56 |
| 22 | 2 | 22 | 58 |
| 23 | 3 | 22 | 66 |
| 24 | 4 | 21 | 55 |
| 25 | 5 | 21 | 61 |
| 26 | 1 | 20 | 58 |

### Beispiel 27 - 29

Katalysatoren, die jeweils 3 Masse% Ru aufverschiedenen Trägermaterialien enthalten, wurden analog zum Beispiel 1 durch ein Tränkverfahren hergestellt und für die Propanoxidation getestet. Die Trägermaterialien TiO₂ und Al₂O₃ ergaben Katalysatoren, die bereits bei tiefen Temperaturen aktiv waren.

**Tabelle 2: Einfluß des Trägermaterials auf die Aktivität bei der Propanoxidation (jeweils 3 Gew-% Ru/Träger; 200 mg Katalysator, 6ml/min, 0,1% Propan, 20% O₂ in He)**

| Beispiel Nr. | | Propanumsatz / % | | |
|---|---|---|---|---|
| | Träger | 50 °C | 100 °C | 150 °C |
| 27 | TiO₂ (Degussa Aerolyst) | 12 | 30 | 81 |
| 28 | TiO₂ (Degussa P25) | 5 | 27 | 59 |
| 29 | Al₂O₃ (Kalichemie Aluperl) | 9 | 19 | 28 |

### Beispiel 30 - 49

Katalysatoren, die 3 Gew-% Ru auf TiO₂ (Degussa Aerolyst) enthielten wurden durch ein Tränkverfahren, wie in Beispiel 1 beschrieben, hergestellt. Nach dem Trocknen wurden sie durch Tränken mit wässrigen Metallsalzlösungen mit je einem Zweitmetall von je 0,3 Gew-% dotiert, wiederum getrocknet, kalziniert und reduziert. Bei der Propanoxidation zeigten die mit Pt, Pd, Rh, Au, Mn, Re, Bi, Te, Mo, Pb oder Seltenerdmetallen dotierten Katalysatoren gegenüber den undotierten Ru-Katalysatoren eine erhöhte Aktivität bei niedrigen Reaktionstemperaturen.

**Tabelle 3: Katalysatorzusammensetzung und Aktivität von dotierten Ru/TiO₂-Katalysatoren bei der Propanoxidation (200 mg Katalysator, 6ml/min, 0,1% Propan, 20% O₂ in He)**

| Beispiel Nr. | | Propanumsatz / % |
|---|---|---|
| | Aktivkomponenten | 100 °C |
| 30 | 3 Gew-% Ru | 30 |
| 31 | 3,3 Gew-% Ru | 32 |
| 32 | 3 Gew-% Ru 0,3Gew-% Pt | 35 |
| 33 | 3 Gew-% Ru 0,3Gew-% Pd | 37 |
| 34 | 3 Gew-% Ru 0,3Gew-% Rh | 36 |
| 35 | 3 Gew-% Ru 0,3Gew-% Au | 36 |
| 36 | 3 Gew-% Ru 0,3Gew-% Mn | 41 |
| 37 | 3 Gew-% Ru 0,3Gew-% Re | 39 |
| 38 | 3 Gew-% Ru 0,3Gew-% La | 33 |
| 39 | 3 Gew-% Ru 0,3Gew-% Ce | 34 |
| 40 | 3 Gew-% Ru 0,3Gew-% Nd | 36 |
| 41 | 3 Gew-% Ru 0,3Gew-% Sm | 33 |
| 42 | 3 Gew-% Ru 0,3Gew-% Gd | 34 |
| 43 | 3 Gew-% Ru 0,3Gew-% Bi | 54 |
| 44 | 3 Gew-% Ru 0,3Gew-% Te | 42 |
| 45 | 3 Gew-% Ru 0,3Gew-% Mo | 40 |
| 46 | 3 Gew-% Ru 0,3Gew-% Pb | 42 |
| 47 | 3 Gew-% Ru 0,3Gew-% Ge | 30 |
| 48 | 3 Gew-% Ru 0,3Gew-% Cr | 43 |
| 49 | 3 Gew-% Ru 0,3Gew-% Zn | 31 |

### Beispiel 50 - 57

Katalysatoren, die 3 Gew-% Ru auf TiO₂ (Degussa Aerolyst) enthielten wurden durch ein Tränkverfahren, wie in den Beispielen 30-49 beschrieben, mit unterschiedlichen Mengen Mn versehen. Die Mn-haltigen Katalysatoren waren deutlich aktiver bei der Propanoxidation als die reinen Ru-Katalysatoren, wobei eine maximale Aktivität bei Mn-Gehalten ab 0,3 Gew-% erreicht wurde.

**Tabelle 4: Katalysatorzusammensetzung und Aktivität bei der Propanoxidation (200 mg Katalysator, 6ml/min, 0, 1 % Propan, 20% O₂ in He)**

| Beispiel Nr. | | Propanumsatz / % | | |
|---|---|---|---|---|
| | Aktivkomponenten | 50°C | 100°C | 150°C |
| 50 | 3 Gew-% Ru | 14 | 28 | 69 |
| 51 | 3 Gew-% Ru | 13 | 26 | 61 |
| 52 | 3 Gew-% Ru 0,01 Gew-% Mn | 17 | 27 | 71 |
| 53 | 3 Gew-% Ru 0,1 Gew-% Mn | 17 | 33 | 78 |
| 54 | 3 Gew-% Ru 0,3 Gew-% Mn | 17 | 46 | 95 |
| 55 | 3 Gew-% Ru 0,7 Gew-% Mn | 19 | 41 | 87 |
| 56 | 3 Gew-% Ru 1 Gew-% Mn | 17 | 43 | 94 |
| 57 | 3 Gew-% Ru 1,5 Gew-% Mn | 18 | 45 | 86 |

### Beispiel 58

2,39 g Ruthenium(III)acetylacetonat wurden in 650 ml Toluol gelöst und unter Rühren zu 60 g Al₂O₃ (Degussa Aluminiumoxid C) gegeben. Nachdem die Mischung 1 h bei 20 °C gerührt worden war, wurde bei Raumtemperatur mehrere Tage stehen gelassen, bis das Lösungsmittel verdampft war. 200 mg des Katalysators wurden 2 h in Luft bei 400 °C kalziniert und anschließend 2h bei 250 °C im Wasserstoffstrom reduziert. Beim anschließenden Test wurden bei 50 °C 44%, bei 100 °C 52% und bei 150 °C 80% des Propans zu CO₂ umgesetzt. Ein Langzeittest bei 22 °C zeigte, daß der Katalysator 8 h ohne Aktivitätsverlust arbeitete (Tabelle 5).

**Tabelle 5: Langzeitversuch an 1 Gew-% Ru/Al₂O₃ nach Beispiel 58 bei 22 °C, Aktivität bei der Propanoxidation (200 mg Katalysator, 6ml/min, 0,1% Propan, 20% O₂ in He)**

| Zeit/h | X/% |
|---|---|
| 0,5 | 38 |
| 1,0 | 41 |
| 1,5 | 43 |
| 2,0 | 42 |
| 2,5 | 42 |
| 3,0 | 43 |
| 3,5 | 43 |
| 4,0 | 42 |
| 4,5 | 42 |
| 5,0 | 41 |
| 5,5 | 42 |
| 6,0 | 42 |
| 6,5 | 42 |
| 7,0 | 41 |
| 7,5 | 42 |

## Patentansprüche

1. Verfahren zur Entfernung von Kohlenwasserstoffspuren aus Gasströmen, wobei man einen Gasstrom, der Spuren von Kohlenwasserstoffen im Bereich von 0,1 bis 2.000 ppm enthält, in Anwesenheit von molekularem Sauerstoff bei einer Temperatur im Bereich von 20 bis 150°C über einen Katalysator mit einer spezifischen BET-Oberfläche von 1 bis 1.500 m²/g leitet, **dadurch gekennzeichnet dass** der Katalysator aus einem offenporigen, oxidischen Grundkörper mit Ruthenium auf dessen Oberfläche in einer Menge von 0,1 bis 20 Gew.%, bezogen auf das Gesamtgewicht des Katalysators, und gegebenenfalls zusätzlich zu Ruthenium Bismut, Blei, Molybdän, Mangan, Tellur, Chrom oder Kombinationen davon besteht.

2. Verfahren nach Anspruch 1, **dadurch gekennzeichnet, dass** das Katalysatorträgermaterial aus der Gruppe ausgewählt wird, bestehend aus Titaniumdioxid, Titan-Silikalit, Aluminiumoxid, Alumosilicaten, Manganoxiden, Magnesiumoxid, saurem Zirkondioxid und Gemischen davon.

3. Verfahren nach Anspruch 2, **dadurch gekennzeichnet, dass** ein Katalysator eingesetzt wird, bei dem das Trägermaterial TiO₂ ist, das zu 20-100 Gew.% aus der Modifikation Anatas besteht.

4. Verfahren nach Anspruch 2, **dadurch gekennzeichnet, dass** ein Katalysator eingesetzt wird, bei dem das Trägermaterial Al₂O₃ ist.

5. Verfahren nach Anspruch 1, **dadurch gekennzeichnet, dass** ein Katalysator eingesetzt wird, bei dem der Rutheniumanteil im Bereich von 0,5 bis 5 Gew.% liegt, vorzugsweise 0,5 bis 3 Gew.%.

## Claims

1. A method for removing traces of hydrocarbons from gas flows, wherein a gas flow containing traces of hydrocarbons in the range of 0.1 to 2,000 ppm is made to pass over a catalyst having a specific BET surface of 1 to 1,500 m²/g in the presence of molecular oxygen and at a temperature in the range of 20 to 150 °C, **characterized in that** said catalyst consists of an open-pore, oxidic base body with a share of ruthenium on its surface from 0.1 to 20 % by weight based on the total weight of the catalyst, and optionally, in addition to the ruthenium of bismuth, lead, molybdenum, manganese, tellurium, chromium or combinations thereof.

2. A method according to Claim 1, **characterized in that** the carrier material of the catalyst is selected from the group consisting of titanium dioxide, titanium silicalite, aluminium oxide, alumosilicates, manganese oxides, magnesium oxide, acid zirconium dioxide and mixtures thereof.

3. A method according to Claim 2, **characterized in that** a catalyst is used having TiO₂ as the carrier material consisting of the modification Anatas in the amount of 20-100 % by weight.

4. A method according to Claim 2, **characterized in that** a catalyst is used having AL₂O₃ as the carrier material.

5. A method according to Claim 1, **characterized in that** a catalyst is used having a ruthenium content in the range of 0.5 to 5 % by weight, particularly of 0.5 to 3 % by weight.

## Revendications

1. Procédé pour éliminer des traces d'hydrocarbures de flux gazeux, où l'on fait passer un flux gazeux, qui contient des traces d'hydrocarbures dans l'intervalle allant de 0,1 à 2000 ppm, en présence d'oxygène moléculaire à une température située dans l'intervalle allant de 20 à 150°C, sur un catalyseur avec une surface spécifique BET de 1 à 1500 m²/g, **caractérisé en ce que** le catalyseur consiste en un corps de base à pores ouverts, oxyde, avec du ruthénium sur sa surface en une quantité de 0,1 à 20 % en poids, sur base du poids total du catalyseur et le cas échéant, en plus du ruthénium, du bismuth, du plomb, du molybdène, du manganèse, du tellure, du chrome ou leurs combinaisons.

2. Procédé selon la revendication 1, **caractérisé en ce que** le matériau support du catalyseur est choisi parmi le groupe consistant en le dioxyde de titane, le silicalite de titane, l'oxyde d'aluminium, des aluminosilicates, des oxydes de manganèse, l'oxyde de magnésium, le dioxyde de zirconium acide et leurs mélanges.

3. Procédé selon la revendication 2, **caractérisé en ce que** l'on met en oeuvre un catalyseur, pour lequel le matériau support est le TiO₂, qui consiste en 20-100 % en poids de la modification anatase.

4. Procédé selon la revendication 2, **caractérisé en ce que** l'on met en oeuvre un catalyseur, pour lequel le matériau support est le Al₂O₃.

5. Procédé selon la revendication 1, **caractérisé en ce que** l'on met en oeuvre un catalyseur pour lequel la quantité de ruthénium se situe dans l'intervalle allant de 0,5 à 5 % en poids, de préférence de 0,5 à 3 % en poids.
